**Europäisches Patentamt**

(19) **European Patent Office**

**Office européen des brevets**

(11) Publication number : **0 323 133 B1**

(12) # EUROPEAN PATENT SPECIFICATION

(45) Date of publication of patent specification :
04.03.92 Bulletin 92/10

(51) Int. Cl.[5] : **C08F 2/08, C08F 112/00**

(21) Application number : **88312169.1**

(22) Date of filing : **22.12.88**

(54) **Multi-stage anionic dispersion homopolymerization to form micro-particles with narrow size distribution.**

(30) Priority : **29.12.87 US 138971**

(43) Date of publication of application :
**05.07.89 Bulletin 89/27**

(45) Publication of the grant of the patent :
**04.03.92 Bulletin 92/10**

(84) Designated Contracting States :
**AT BE DE FR GB IT NL SE**

(56) References cited :
**US-A- 3 402 160**
**US-A- 3 793 245**
**US-A- 4 247 434**

(73) Proprietor : **MOBIL OIL CORPORATION**
**150 East 42nd Street**
**New York New York 10017 (US)**

(72) Inventor : **Gunesin, Binnur Zeynep**
**27 Old Stirling Road**
**Warren New Jersey 07060 (US)**
Inventor : **Murray, James Gordon**
**Road No. 1 Box 89A**
**Whiting Vermont (US)**
Inventor : **Gustafson, Ronald John**
**20 Keath Road Road No. 4**
**New Brunswick New Jersey 08902 (US)**
Inventor : **Schwab, Frederick Charles**
**34 Spear Street**
**Netuchen New Jersey 08840 (US)**

(74) Representative : **Colmer, Stephen Gary**
**Mobil Court 3 Clements Inn**
**London WC2A 2EB (GB)**

**EP 0 323 133 B1**

Jouve, 18, rue Saint-Denis, 75001 PARIS

## Description

There is considerable interest in developing methods for preparing monodisperse polymer particles; that is, polymer particles having a narrow size distribution, particularly with particle sizes greater than about 2 µm (microns). One polymer of particular interest is polystyrene.

As disclosed in U.S. Patent 4,247,434, microparticles in latex form find utility in a number of applications and yet other applications are awaiting the development of monodisperse polymer particles having a particle size above 2 µm (microns). Such polymer particles are used as a reference standard for the calibration of various instruments. The difficulty of preparing monodisperse polymer particles is evident from U.S. Patent 4,247,434 in which the polymerisation is conducted in microgravity, such as in outer-space.

According to the present invention, there is provided a process for the dispersion homopolymerization of an anionically polymerizable monomer to obtain polymer particles having a particle size distribution ($D_w/D_n$), wherein $D_w$ is the weight average of diameter and $D_n$ is the number average diameter, of 1.2 or less, which process comprises conducting the polymerization in at least 3 successive stages of monomer addition in an inert, non-polar dispersing medium which is not a solvent for the polymerized monomer and in the presence of an anionic polymerization catalyst wherein from 60 to 90 weight percent of the monomer is introduced in the first stage and correspondingly, from 40 to 10 weight percent is introduced in the successive stages. Suitable monomers include vinyl aromatic monomers, especially styrene.

Suitable anionic catalyst include n-butyl-lithium, sec-butyl-lithium and t-butyl-lithium. The concentration of the catalyst is generally less than $5 \times 10^{-3}$ moles per mole of monomer.

The reaction is conducted in an inert medium, which is a non-solvent for the polymer, such as a paraffinic or monoolefinic $C_4$ to $C_7$, preferably $C_3$ to $C_6$ hydrocarbon. Aromatic hydrocarbons and polar solvents are not suitable. Examples of useful slurry media are butane, isobutane, pentane, isopentane, hexane, heptane, 2,2 dimethyl-butane, and petroleum ether.

The process of the invention may be effected at temperatures between 0°C and 100°C, preferably between 0°C and 25°C. It is contemplated that the reaction can be conducted under pressure with a solvent such as isobutane which is highly volatile at the reaction temperature. Such a highly volatile solvent and pressure reaction conditions are advantageous in separating the polymer particles from the slurry medium.

The polymeric dispersing agent which is preferably used to maintain the polymer in suspension as it is formed is advantageously a block copolymer particularly A-B diblock copolymers in which the A block is styrene and the B block is an aliphatic monomer block of isoprene or hydrogenated isoprene, or a styrene-butadiene radial block copolymer. The dispersing agent is generally present in amounts of 0.1 to 5.0 weight percent of the monomers.

The polymerization reaction is preferably conducted without agitation, and violent agitation or mixing is generally not considered desirable. The monomer is added in at least three stages with considerable latitude in the number of stages used and the proportion of monomer added during each stage. The greater the number of stages, in general, the narrower the particle size distribution and the larger the particle size. The bulk of the monomer is introduced in the first stage and 10 weight percent to 40 weight percent of the monomer, preferably 20 to 30 weight percent, is introduced in two or more successive stages.

Particle size distributions ($D_w/D_n$) of less than 1.2, in which $D_w$ = weight average diameter and $D_n$ = number average diameter, are achived with particles of at least 2 µm (micron) average diameter.

The following Example illustrates the invention.

## EXAMPLE

The following ingredients were utilized in Stage 1:

```
     35.15 g styrene      (purified by passing through
                          activated alumina)
    155.00 g hexane
      0.88 g Stereon - 840A*
      3.00 g tetrahydrofuran (THF)
      0.1 ml 1% by weight phenanthroline
      0.25 ml 1.4M sec-butyl-lithium
```

(*Stereon 840A is a styrene-butadiene radial block copolymer from Firestone. STEREON is a trade mark).
The Styrene and hexane were added to a 500 ml bottle. Stereon 840A was then dissolved in the styrene and hexane and the THF and phenanthroline were next added. The system was cooled to 5°C in ice/water and then purged with nitrogen. The sec-butyl lithium was next added titrimetrically through a déoxygenated hypodermic syringe until the orange color produced stayed stable. The system was left without rotation or mixing for 2 hours whereafter an additional 7 g of styrene was added after distilling over sec-butyl-lithium (Stage 2). After 2 more hours an additional 10 g of styrene was added and left for 2 hours (Stage 3).

Samples were taken after each Stage 1, 2 and 3 and studied for particle size and particle size distribution. (Particle size distribution = $D_w/D_n$, in which $D_w$ is the weight average particle size and $D_n$ is the number average particle size.) The results were:

|  | Average Particle Size $\mu$m (microns) | Particle Size Distribution |
|---|---|---|
| Stage 1 | 3.5 | Broad |
| Stage 2 | 4.0 | Broad |
| Stage 3 | 5.0 | 1.2 |

No new particles appear to form in Stage 2 and Stage 3 but the existing particles from Stage 1 continue to grow.

## Claims

1. A process for the dispersion homopolymerization of an anionically polymerizable monomer to obtain polymer particles having a particle size distribution ($D_w/D_n$), wherein $D_w$ is the weight average of diameter and $D_n$ is the number average diameter, of 1.2 or less, which process comprises conducting the polymerization in at least 3 successive stages of monomer addition in an inert, non-polar dispersing medium which is not a solvent for the polymerized monomer and in the presence of an anionic polymerization catalyst wherein from 60 to 90 weight percent of the monomer is introduced in the first stage and correspondingly, from 40 to 10 weight percent is introduced in the successive stages.

2. A process according to claim 1 wherein the monomer is a vinyl aromatic monomer.

3. A process according to claim 2 wherein the monomer is styrene.

4. A process according to any preceding claim wherein the anionic polymerization catalyst comprises sec-butyl-lithium.

5. A process according to any preceding claim wherein the dispersing medium comprises a $C_3$-$C_6$ aliphatic hydrocarbon.

6. A process according to any preceding claim wherein the dispersing medium contains a polymeric dispersing agent.

7. A process according to any preceding claim wherein the polymeric dispersing agent comprises a styrene-butadiene radial block copolymer.

8. A process according to any preceding claim wherein the homopolymerization is effected without agitation.

9. A process according to any preceding claim wherein the polymer particles have an average size greater than 2 $\mu$m (microns).

## Revendications

1. Un procédé pour l'homopolymérisation par dispersion d'un monomère polymérisable par voie anionique en vue d'obtenir des particules de polymère présentant une distribution de dimension particulaire ($D_w/D_n$), dans laquelle $D_w$ est la moyenne pondérale du diamètre et $D_n$ est le diamètre moyen en nombre, égal ou inférieur à 1,2, ce procédé consistant à mettre en oeuvre la polymérisation en au moins 3 étapes successives d'addition du monomère dans un milieu de dispersion non polaire qui n'est pas un solvant pour le monomère polymérisé et en présence d'un catalyseur de polymérisation anionique dans lequel 60 à 90% en poids du monomère sont introduits dans une première étape et de façon correspondante, 40 à 10% en poids sont introduits dans les étapes ultérieures.

2. Un procédé selon la revendication 1, dans lequel le monomère est un monomère aromatique vinylique.

3. Un procédé selon la revendication 2, dans lequel le monomère est le styrène.

4. Un procédé selon l'une quelconque des revendications précédentes, dans lequel le catalyseur de polymérisation anionique comprend du sec-butyl-lithium.

5. Un procédé selon l'une quelconque des revendications précédentes, dans lequel le milieu de dispersion est formé d'un hydrocarbure aliphatique en $C_3$-$C_6$.

6. Un procédé selon l'une quelconque des revendications précédentes, dans lequel le milieu de dispersion contient un agent de dispersion polymère.

7. Un procédé selon l'une quelconque des revendications précédentes, dans lequel l'agent de dispersion de polymère comprend un copolymère bloc radial styrène-butadiène.

8. Un procédé selon l'une quelconque des revendications précédentes, dans lequel l'homopolymérisation est effectuée en l'absence d'agitation.

9. Un procédé selon l'une quelconque des revendications précédentes, dans lequel les particules de polymère présentent une dimension moyenne supérieure à 2 μm (microns).

**Patentansprüche**

1. Verfahren zur Dispersionshomopolymerisation eines anionisch polymerisierbaren Monomers, um Polymerteilchen mit einer Teilchengrößenverteilung ($D_w$/$D_n$), worin $D_w$ den gewichtsmäßigen Durchschnitt des Durchmessers und $D_n$ den zahlenmäßigen Durchschnitt des Durchmessers bedeuten, von 1,2 oder weniger zu erhalten, wobei das Verfahren das Polymerisieren in mindestens drei aufeinanderfolgenden Stufen der Monomerzugabe in einem inerten, nicht polaren Dispersionsmittel, das für das polymerisierte Monomer kein Lösungsmittel darstellt, in Gegenwart eines anionischen Polymerisationskatalysators beinhaltet, und wobei 60 bis 90 Gew.-% des Monomers in der ersten Stufe und dementsprechend 40 bis 10 Gew.-% in den darauffolgenden Stufen zugeführt werden.

2. Verfahren nach Anspruch 1, worin das Monomer ein aromatisches Vinylmonomer ist.

3. Verfahren nach Anspruch 2, worin das Monomer Styrol ist.

4. Verfahren nach einem der vorhergehenden Ansprüche, worin der anionische Polymerisationskatalysator sec.-Butyl-lithium enthält.

5. Verfahren nach einem der vorhergehenden Ansprüche, worin das Dispersionsmedium einen aliphatischen C-3 bis C-6 Kohlenwasserstoff enthält.

6. Verfahren nach einem der vorhergehenden Ansprüche, worin das Dispersionsmedium ein polymeres Dispergiermittel enthält.

7. Verfahren nach einem der vorhergehenden Ansprüche, worin das polymere Dispergiermedium ein Styrol-Butadien-Radialblockcopolymer enthält.

8. Verfahren nach einem der vorhergehenden Ansprüche, worin die Homopolymerisation ohne Rühren durchgeführt wird.

9. Verfahren nach einem der vorhergehenden Ansprüche, worin die Polymerteilchen eine durchschnittliche Größe von über 2 μm (Mikron) aufweisen.